# EUROPEAN PATENT APPLICATION

(11) **EP 3 333 791 A1**
(43) Date of publication of application: **13.06.2018**
(21) Application number: 16306658.2
(22) Date of filing: 12.12.2016
(51) Int. Cl.: G06Q 20/40

(54) **METHOD FOR GENERATING A CRYPTOGRAM IN A USER DEVICE AND VERIFYING THIS CRYPTOGRAM IN A PAYMENT SERVER, CORRESPONDING USER DEVICE AND PAYMENT SERVER**

(71) Applicant: GEMALTO SA, 92190 Meudon (FR)
(72) Inventor: MARTIN, Alain, Gemenos cedex 13881 (FR)

(57) **Abstract**

The invention concerns a method for generating a cryptogram in a user device (32) and verifying the cryptogram in a payment server (33), the cryptogram being in the form of a dynamic Card Verification Value (dCVV) generated in the user device (32) by a generation algorithm from an authentication key and a diversification value, the diversification value having been synchronized previously between the user device (32) and the payment server (33) through a telecommunication network distinct from a payment network, so that the user device (32) and the payment server (33) store in their respective memories the same diversification value, the method comprising:
a- Displaying the dCVV generated in the user device(16) on the screen of the user device (32);
b- Copying the dCVV, together with payment credentials into a payment form of a merchant server (38);
c- Sending from the merchant server (38) through the payment network an authorisation request to the payment server (33), the authorisation request comprising the payment credentials and the dCVV;
d- Verifying at the payment server (33), by a verification algorithm, that the received dynamic CVV (dCVV) corresponds to a dynamic CVV generated from the diversification value stored in its memory, and:
- if the verification is positive, sending a positive authorization message to a bank server (39);
- if the verification is negative, sending a negative authorization message to the bank server (39).

## Description

### TECHNICAL FIELD

The present invention relates to a method for generating, in a user device, and verifying, in a payment server, a dynamic Card Verification Value (dCVV). In particular but not exclusively, the invention is applicable to on-line payment transactions and to tokenisation/detokenization of Primary Account Numbers.

### BACKGROUND OF THE INVENTION

In the payment card ecosystem, a payment server is an authorisation server used for authorizing or not payments originating from a merchant payment terminal or from a merchant website or mobile application (for e-commerce).

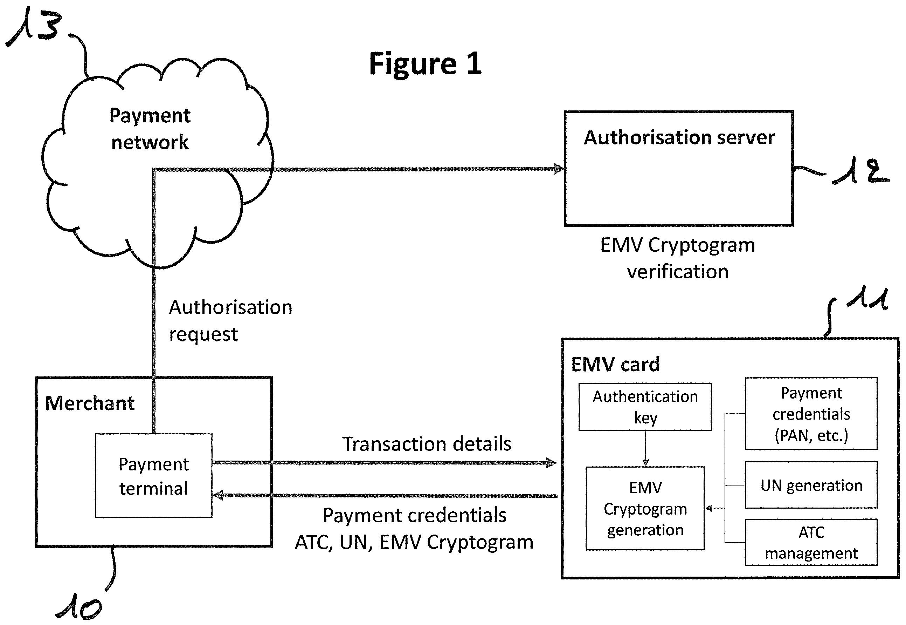

Typically, as illustrated in figure 1, for proximity payments at a merchant payment terminal 10, an EMV card 11 generates an EMV cryptogram based on transaction details such as the amount, from payment credentials such as the card Primary Account Number (PAN), from an unpredictable number (UN) and from an Application Transaction Counter (ATC). An authentication key securely stored in the EMV card 11 is also used in the calculation of this EMV cryptogram. Transaction details, UN and ATC all contribute to making the EMV cryptogram unique and unpredictable.

The payment terminal 10 then sends an authorisation request to an authorisation server through a payment network 13. The payment network 13 may be that of an international card scheme or a domestic card scheme or a private network of the card issuer or a combination of them. The authorisation request message comprises the transaction details, payment credentials, ATC, UN and the EMV cryptogram.

The authorisation server 12 uses its own version of the authentication key to verify the EMV cryptogram based on the information received in the authorisation request message.

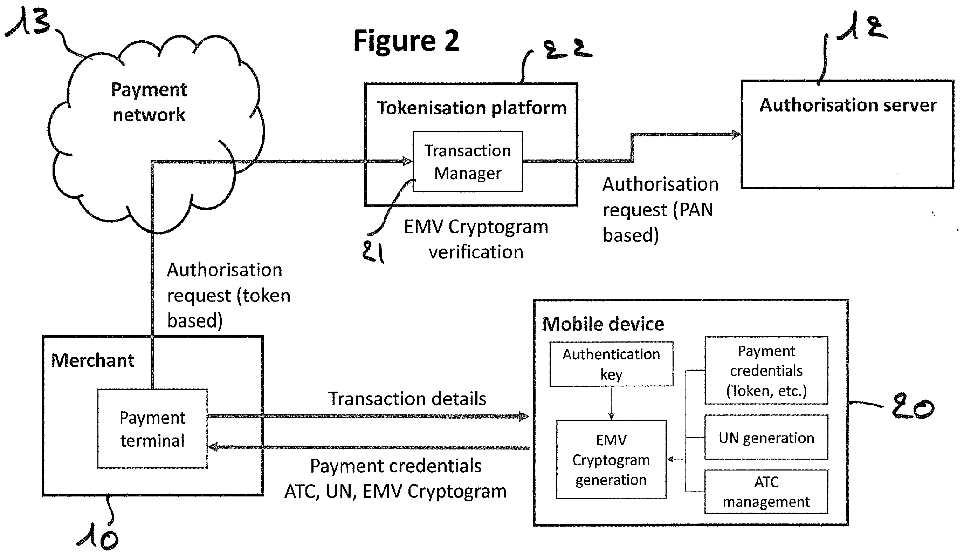

Similarly, as illustrated in figure 2, when the proximity payment is initiated from a mobile device 20 and not an EMV card, the payment credentials, stored in the mobile device 20, will often comprise a token, i.e. a surrogate value of the Primary Account Number, as defined by the EMVCo specifications. In this case, the payment server used to verify the cryptogram is a Transaction Manager 21 which is part of a Tokenisation platform 22. A positive cryptogram verification, combined with other verifications, by the Transaction Manager 21 will lead to the detokenization of the token back to its original PAN. The Transaction Manager 21 then forwards an authorisation request that includes the PAN to the authorisation server 12.

In e-commerce, a vast majority of payments are conducted by the user entering manually payment credentials in the payment form of the merchant. In this situation, there is no automatic communication between merchant and consumer payment device and an EMV cryptogram is not used.

However, the Card Security Code (also called Card Verification Value - CVV) field is available in the payment form and could be used to manually enter a 3-digit cryptogram. The difficulty resides in making this cryptogram unique and unpredictable using information that is transmitted to the payment server in spite of the lack of automatic communication between merchant and consumer payment device.

The invention proposes a solution to this problem.

More precisely, the invention proposes a method for generating a cryptogram in a user device and verifying the cryptogram in a payment server, the cryptogram being in the form of a dynamic Card Verification Value (dCVV) generated in the user device by a generation algorithm from an authentication key and a diversification value, the diversification value having been synchronized previously between the user device and the payment server through a telecommunication network distinct from a payment network, so that the user device and the payment server store in their respective memories the same diversification value, the method comprising:
a- Displaying the dCVV generated in the user device on the screen of the user device;
b- Copying the dCVV, together with payment credentials into a payment form of a merchant server;
c- Sending from the merchant server through the payment network an authorisation request to the payment server, the authorisation request comprising the payment credentials and the dCVV;
d- Verifying at the payment server, by a verification algorithm, that the received dynamic CVV (dCVV) corresponds to a dynamic CVV generated from the diversification value stored in its memory, and:
   - if the verification is positive, sending a positive authorization message to a bank server;
   - if the verification is negative, sending a negative authorization message to the bank server.

Preferably, the diversification value is generated in the user device and sent to the payment server through the telecommunication network.

Alternatively, the diversification value is generated in the payment server and sent to the user device through the telecommunication network.

In another embodiment, the diversification value is generated in a provisioning server and sent to the user device and to the payment server through the telecommunications network. The payment credentials preferably comprise a token and its associated expiry date, the token being a surrogate value of a Primary Account Number.

In another embodiment, the payment credentials comprise a Primary Account Number and its associated expiry date.

The diversification value can comprise an Application Transaction Counter (ATC). Preferably, the payment server verifies the dCVV as part of required verifications to detokenize the token back to the Primary Account Number (PAN) and sends the PAN in an authorization message to the bank server.

The authentication key can be a dynamic authentication key (LUK) generated from the transaction counter value.

In one embodiment, the dCVV is generated upon identification of the user and his approval of the usage of his payment credentials.

The invention also concerns a user device comprising a dCVV generation algorithm for generating and displaying a dynamic CVV (dCVV) in the user device thanks to a diversification value stored in its memory and previously shared with a payment server for synchronization purposes through a telecommunication network distinct from a payment network.

The invention also concerns a payment server comprising a dCVV verification algorithm for verifying a dynamic CVV (dCVV) received in an authorisation request message sent by a merchant server, the dCVV having been generated by a user device, the verification being achieved thanks to a diversification value synchronized previously between the user device and the payment server through a telecommunication network distinct from a payment network.

The method according to the invention will be better understood by reading the following description of a preferred embodiment of the invention in regard of the figures that represent:
- Fig. 1 and 2 proximity payment systems using EMV cryptograms;
- Fig. 3 a system in which the method of the present invention is implemented;
- Fig. 4 and 5 an example of user device and of displayed information.

Fig. 1 and 2 have been previously described in regard of the state of the art.

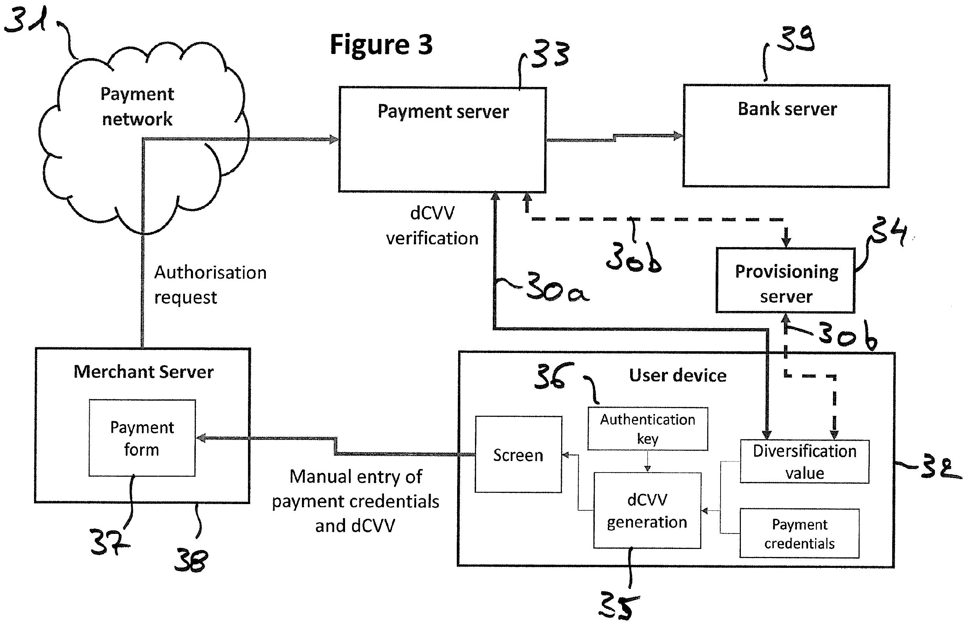

Fig. 3 represents a system in which the method of the present invention is implemented.

The system comprises essentially two different networks:
- A telecommunication network 30a or 30b;
- A payment network 31.

These two networks are distinct: The telecommunication network 30a or 30b is used for synchronization purposes: A same diversification value DV has to be stored in a user device 32 and in a payment server 33. The user device 32 is for example a smartphone.

This can be done for example by generating in the user device 32 this diversification value and sending it to the payment server 33 through the telecommunication network 30a.

An alternative consists in generating this diversification value in the payment server 33 and sending it to the user device 32 through the telecommunication network 30a.

Another alternative consists in generating this diversification value in a provisioning server 34 and sending it to the user device 32 and to the payment server 33 through the telecommunications network 30b.

The diversification value can be a random number or an incremental of a previously used diversification value.

The result of this first step is that the user device 32 and the payment server 33 store in their respective memories the same diversification value.

After having provisioned the user device 32 and the payment server 33 with the same diversification value, and when the user of the device 32 wishes to make a transaction with a merchant's server, a dCVV generation algorithm 35 generates a dCVV from at least an authentication key 36 and the diversification value.

The authentication key is for example a key that has been diversified from a master key, the master key being present at the level of the payment server 33.

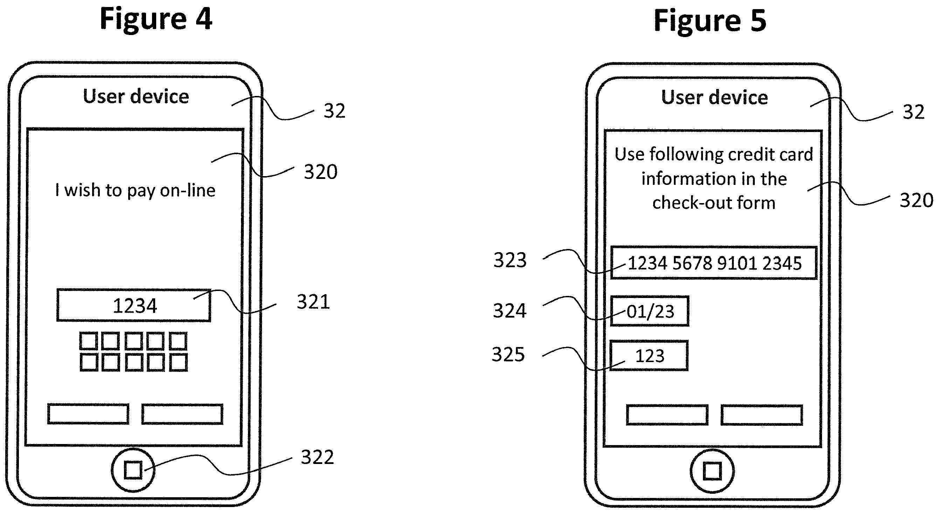

The user may, as a pre-requisite to dCVV generation, identify himself, for example on the user device 32, for example by entering a passcode 321 or for example by placing a finger on a fingerprint scanner 322 as shown in figure 4.

After generation of the dCVV, it is displayed (325) on the screen 320 of the user device 32. The payment credentials 323, 324 may also be displayed on the screen 320 as shown in figure 5.

The user has then to enter manually the dCVV and payment credentials into a payment form 37 of a merchant's server 38.

The merchant's server 38 then sends through the payment network 31 an authorisation request to the payment server 33, the authorisation request comprising the payment credentials and the dCVV.

By receiving the authorisation request, the payment server 33 verifies that the received dCVV corresponds to a dynamic CVV generated from the diversification value stored in its memory, and:
- if the verification is positive, sends a positive authorization message to a bank server 39;
- if the verification is negative, sending a negative authorization message to the bank server 39.

The invention permits to use a standardized payment form of the merchant for transmitting a dCVV without having to add a field in the authorization request message for transmitting a diversification value. The standardized format ISO 8583 can be used.

The payment credentials comprise in a preferred embodiment a token and its associated expiry date, the token being a surrogate value of a Primary Account Number. In this case, the payment server 33 verifies the dCVV as part of required verifications to detokenize the token back to the Primary Account Number (PAN) and sends the PAN in an authorization message to the bank server 39.

The payment credentials can also comprise the name of the user and other data.

In another embodiment, the payment credentials comprise a Primary Account Number and its associated expiry date. No detokenization is done in this embodiment.

The diversification value can comprise (or consist in) an Application Transaction Counter (ATC), known in the state in the art.

The authentication key can be static or dynamic. When it is dynamic, it can be a dynamic authentication key (LUK) generated from the transaction counter value ATC.

The invention also concerns a user device 32 comprising a dCVV generation algorithm for generating and displaying a dCVV in the user device 32 thanks to a diversification value stored in its memory and previously shared with a payment server 33 for synchronization purposes through a telecommunication network distinct from a payment network.

Finally, the invention concerns a payment server 33 comprising a dCVV verification algorithm for verifying a dCVV received in an authorisation request message sent by a merchant server 38, the dCVV having been generated by a user device 32, the verification being achieved thanks to a diversification value synchronized previously between the user device 32 and the payment server 33 through a telecommunication network distinct from a payment network.

## Claims

1. Method for generating a cryptogram in a user device (32) and verifying said cryptogram in a payment server (33), said cryptogram being in the form of a dynamic Card Verification Value (dCVV) generated in said user device (32) by a generation algorithm from an authentication key and a diversification value, said diversification value having been synchronized previously between said user device (32) and said payment server (33) through a telecommunication network distinct from a payment network, so that said user device (32) and said payment server (33) store in their respective memories the same diversification value, said method comprising:
a- Displaying the dCVV generated in said user device(16) on the screen of said user device (32);
b- Copying said dCVV, together with payment credentials into a payment form of a merchant server (38);
c- Sending from said merchant server (38) through said payment network an authorisation request to said payment server (33), said authorisation request comprising said payment credentials and said dCVV;
d- Verifying at said payment server (33), by a verification algorithm, that the received dynamic CVV (dCVV) corresponds to a dynamic CVV generated from the diversification value stored in its memory, and:
- if said verification is positive, sending a positive authorization message to a bank server (39);
- if said verification is negative, sending a negative authorization message to said bank server (39).

2. Method according to claim 1, wherein said diversification value is generated in said user device (32) and sent to said payment server (33) through said telecommunication network.

3. Method according to claim 1, wherein said diversification value is generated in said payment server (33) and sent to said user device (32) through said telecommunication network.

4. Method according to claim 1, wherein said diversification value is generated in a provisioning server (34) and sent to said user device and to said payment server through said telecommunications network.

5. Method according to claim 1, wherein said payment credentials comprise a token and its associated expiry date, said token being a surrogate value of a Primary Account Number.

6. Method according to claim 1, wherein said payment credentials comprise a Primary Account Number and its associated expiry date.

7. Method according to claim 1, wherein said diversification value comprises an Application Transaction Counter (ATC).

8. Method according to claim 5, wherein said payment server verifies said dCVV as part of required verifications to detokenize the token back to the Primary Account Number (PAN) and sends said PAN in an authorization message to said bank server (39).

9. Method according to claims 1 and 7, wherein said authentication key is a dynamic authentication key (LUK) generated from said transaction counter value.

10. User device (32) comprising a dCVV generation algorithm for generating and displaying a dynamic CVV (dCVV) in said user device (32) thanks to a diversification value stored in its memory and previously shared with a payment server (33) for synchronization purposes through a telecommunication network distinct from a payment network.

11. Payment server (33) comprising a dCVV verification algorithm for verifying a dynamic CVV (dCVV) received in an authorisation request message sent by a merchant server (38), said dCVV having been generated by a user device (32) according to claim 10, said verification being achieved thanks to a diversification value synchronized previously between said user device (32) and said payment server (33) through a telecommunication network distinct from a payment network.
